# FASCICULE DE BREVET EUROPEEN

(11) **EP 2 814 676 B1**
(45) Date de publication et mention de la délivrance du brevet: **15.06.2016**
(21) Numéro de dépôt: 13703435.1
(22) Date de dépôt: 12.02.2013
(51) Int. Cl.: F16F 1/26

(54) **LAME DE RESSORT POUR SYSTEME DE SUSPENSION DE VEHICULE AUTOMOBILE ET SYSTEME DE SUSPENSION L'INCLUANT**
FEDERBLATT RADAUFHÄNGUNG SYSTEM FÜR FAHRZEUG
SPRING LEAF SUSPENSION SYSTEM FOR VEHICLE AND SUSPENSION SYSTEM INCLUDING THE SAME

(30) Priorité: 13.02.2012 FR 1251344
(43) Date de publication de la demande: 24.12.2014
(73) Titulaire: Peugeot Citroën Automobiles SA, 78140 Vélizy Villacoublay (FR); HUTCHINSON, 75384 Paris Cédex 08 (FR)
(72) Inventeur: BERTHIAS, Gilles, F-91270 Vigneux Sur Seine (FR); LE TELLIER, Sylvain, F-92380 Garches (FR); CIOLCZYK, Jean-Pierre, F-45200 Montargis (FR); DIAS, Jean-Paul, F-45290 Varennes (FR)
(74) Mandataire: Cabinet Plasseraud
(86) Numéro de dépôt international: PCT/EP2013/052721
(87) Numéro de publication internationale: WO 2013/120818

(56) Documents cités:
- EP-A1- 1 378 382

## Description

L'invention concerne une lame de ressort pour un système de suspension de véhicule automobile ainsi qu'un système de suspension comprenant une telle lame de ressort.

Les véhicules automobiles dont la suspension est réalisée par une ou plusieurs lames de ressort ont un défaut majeur. Du fait du galbe initial des lames, galbe généralement parabolique, la longueur entre les extrémités de la lame varie lorsque la charge ou la hauteur du véhicule varie. Pour donner un ordre de grandeur, la variation de longueur sur un véhicule automobile entre une lame de ressort galbée et la même lame de ressort mise à plat par la charge est d'environ 10 à 15 millimètres. De ce fait, il n'est pas possible d'accrocher de telles lames de ressort directement sur le châssis ou sur la caisse du véhicule automobile car cela rigidifie très fortement la suspension puisque l'allongement est empêché, ou encore un cloquage violent de la lame au-delà d'une certaine charge peut survenir. De plus, cela crée de fortes tensions au niveau des fixations généralement réalisées aux extrémités de la lame de ressort. Pour pallier à cet inconvénient, de manière classique, un montage avec un point fixe à une extrémité de la lame et une articulation située à l'autre extrémité, communément appelée une jumelle, est utilisé. L'utilisation d'une articulation de type jumelle permet les variations de longueur précitées entre la lame galbée et une lame mise à plat par la charge. En variante de réalisation, il est communément utilisé une jumelle à chacun des points de fixation de la lame de ressort au châssis du véhicule. Des liaisons élastiques peuvent remplacer les jumelles précitées. Un montage d'une lame de ressort pour la suspension d'un véhicule automobile montée avec des cales élastiques est illustré dans les documents FR 2 958 215 et EP-A1- 1 378 382. D'autres montages faisant partir de l'état de l'art sont connus des documents EP1080853, FR 2958215, WO86/00854 et GB1205850.

Toutefois, un tel montage complexifie la liaison entre la lame de ressort et le châssis ou la caisse du véhicule automobile. Dans le cadre d'une lame de ressort positionnée de manière transversale à la direction de fonctionnement d'un véhicule automobile, il apparait en plus que la variation de longueur de la lame de ressort, du fait des débattements des roues auxquelles elle est liée, engendre des déplacements latéraux parasites desdites roues et fait varier de ce fait la voie du véhicule automobile. Le comportement routier du véhicule automobile s'en trouve alors affecté. Si cela n'est pas trop gênant quand les lames sont disposées dans le sens longitudinal du véhicule, cela devient très pénalisant quand les lames sont placées transversalement. En effet, dans ce cas, la variation de voie du train roulant ainsi équipé engendre des braquages parasites du véhicule et un mauvais suivi de trajectoire, que ce soit en ligne droite ou en courbe, que la lame soit montée sur le train avant ou sur le train arrière du véhicule automobile. D'autre part, il existe un autre phénomène parasite dû à cette structure et ce montage qui apparait lors d'une prise de virage. Dans ce cas, l'effort transversal venant du pneu (force centrifuge à contrer) va générer une translation de la lame de droite à gauche, ou de gauche à droite selon le virage pris. En conséquence, cela perturbe encore plus l'équilibre du véhicule en créant un retard et un déphasage dans des phases transitoires pour entrer dans un virage par exemple.

Un but de l'invention est de fournir une lame de ressort pour un système de suspension de véhicule automobile qui ne présente pas les inconvénients précédents afin d'assurer un bon suivi de trajectoire du véhicule automobile en fonctionnement.

A cette fin, il est prévu, selon l'invention, une lame de ressort pour un système de suspension de véhicule automobile comportant une partie centrale et deux zones d'extrémité situées de part et d'autre de la partie centrale, de zones d'assemblage situées respectivement entre la partie centrale et les zones d'extrémité, la partie centrale étant agencée de sorte à pouvoir se déformer en conservant une distance entre les zones d'assemblage fixe et le profil des zones d'extrémité présentant une courbure dans le même sens que la courbure de la zone centrale.

Ainsi, le fait que la partie centrale soit agencée de sorte à pouvoir se déformer en conservant une distance entre les zones d'assemblage fixe, permet d'assurer une suspension et une stabilisation du véhicule en fonctionnement sans induire de mouvements parasites latéraux qui nuisent au bon suivi de la trajectoire dudit véhicule.

Avantageusement, mais facultativement, la lame de ressort présente au moins l'une des caractéristiques suivantes :
- la partie centrale comporte une zone centrale présentant une courbure et se prolongeant, de part et d'autre, par des zones latérales adjacentes présentant une courbure inverse de la courbure de la zone centrale ;
- les zones d'assemblages sont situées à la tangence entre les zones latérales adjacentes de la partie centrale et les zone d'extrémité.

Il est prévu, d'autre part, selon l'invention, un système de suspension comportant un stabilisateur lié, à chacune de ses extrémités, à un support de roue, et des moyens d'assemblage du stabilisateur à un châssis du véhicule automobile, le stabilisateur comportant une lame de ressort telle que précédemment décrite.

Avantageusement, mais facultativement, le système de suspension présente au moins l'une des caractéristiques suivantes :
- les moyens d'assemblage forment une liaison pivot d'axe perpendiculaire à la lame de ressort entre les zones d'assemblage de la lame de ressort et le châssis du véhicule ; et
- les moyens d'assemblage forment une liaison rotule entre les zones d'assemblage de la lame de ressort et le châssis du véhicule.

D'autres avantages et caractéristiques de l'invention apparaitront lors de la description ci-après d'un mode de réalisation préféré de l'invention. Aux dessins annexés :
- la figure 1 est une représentation schématique d'un système de suspension comprenant une lame de ressort selon l'invention ;
- la figure 2 est une vue schématique illustrant la déformation de la lame de ressort dans le système de suspension de la figure 1 ;
- la figure 3 est une vue schématique du profil d'une lame de ressort selon l'invention ; et,
- la figure 4 est une vue tridimensionnelle d'une lame de ressort selon l'invention.

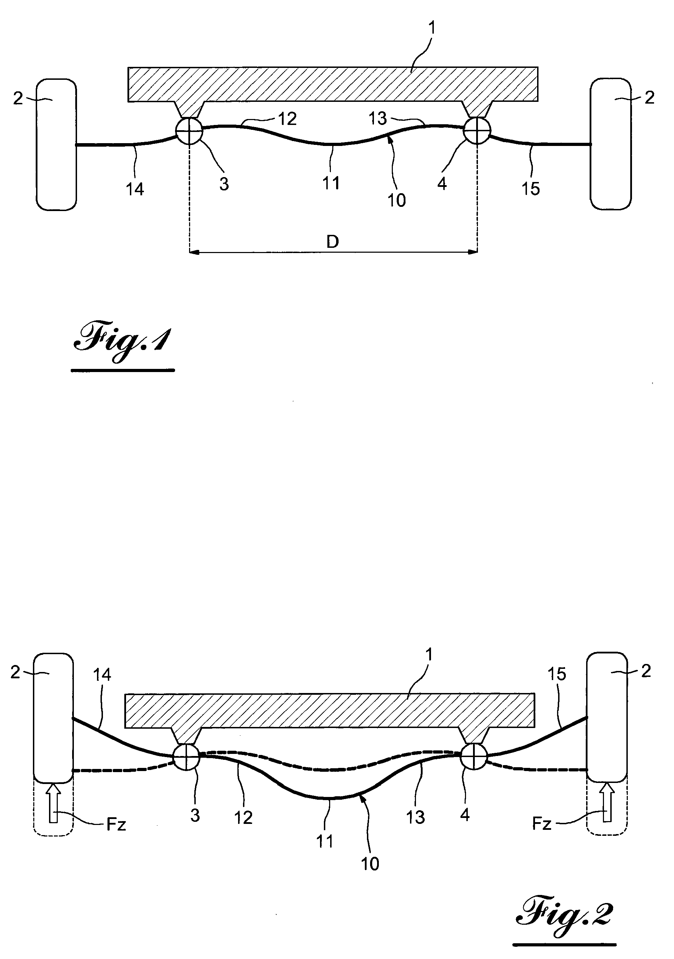

En référence à la figure 1, nous allons décrire un système de suspension comportant une lame de ressort 10 selon l'invention. Le système de suspension pour véhicule automobile comprend la lamé de ressort 10 qui est fixée à une caisse ou un châssis 1 de véhicule automobile à l'aide de premiers 3 et deuxièmes 4 moyens d'assemblage. Ces premiers 3 et deuxièmes 4 moyens d'assemblage sont séparés par une distance D. La lame de ressort 10 présente un profil ondulé et comporte, lié à chacune des extrémités de la lame de ressort 10, un support d'une roue 2.

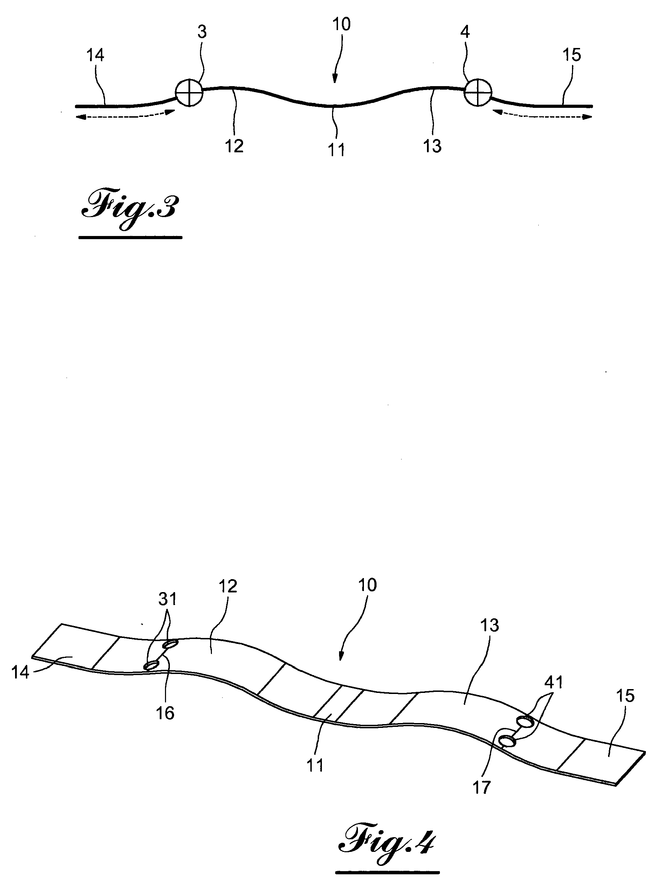

En référence à la figure 3, la lame de ressort 10 selon l'invention présente un profil comportant une partie centrale 11, 12, 13 et de deux zones d'extrémité 14, 15 situées de part et d'autre de la partie centrale. Entre la partie centrale 11, 12, 13 et chacune des zones d'extrémité 14, 15, la lame de ressort présente des zones d'assemblage 16, 17 au niveau desquelles les moyens d'assemblage 3, 4 vont être fixés sur la lame de ressort 10 selon l'invention. La partie centrale de la lame de ressort 10 selon l'invention présente ici trois zones. La première zone centrale 11 présente une courbure, ici concave. Cette première zone centrale 11 est entourée de deux zones latérales adjacentes 12, 13 qui présentent une courbure inverse à la courbure de la zone centrale 11. Dans le cas illustré ici, les courbures des zones latérales adjacentes 12, 13 leur confèrent une forme convexe. Au niveau de la liaison entre la zone centrale 11 et les deux zones latérales adjacentes 12, 13, il y a continuité de profil dans le sens où la zone centrale 11 est tangente avec les zones latérales adjacentes 12, 13 respectivement.

La première zone d'extrémité 14 présente une courbure inverse à la courbure de la première zone latérale adjacente 12 à laquelle elle est rattachée. Une première zone d'assemblage 16 est située à la limite entre la première zone d'extrémité 14 et la première zone latérale adjacente 12 au niveau du point d'inversion de tangence entre la première zone latérale adjacente 12 et la première zone d'extrémité 14. De même, la deuxième zone d'extrémité 15 présente une courbure inverse à la deuxième zone latérale adjacente 13, la deuxième zone d'assemblage 17 étant localisée au niveau du point d'inversion de tangente entre la deuxième zone d'extrémité 15 et la deuxième zone latérale adjacente 13. Comme illustré à la figure 4, la première zone d'assemblage 16 comporte des moyens de fixation 31 des moyens d'assemblage 3 et la deuxième zone d'assemblage 17 comporte des moyens de fixation 41 de deuxièmes moyens d'assemblage 4. Ici, les premiers moyens de fixation 31 et les deuxièmes moyens de fixation 41 se présentent sous la forme d'une paire d'orifices traversant une épaisseur de la lame de ressort 10 selon l'invention.

De nouveau en référence aux figures 1 et 2, nous allons brièvement décrire un fonctionnement lors d'une déformation de la lame de ressort 10 selon l'invention montée dans un système de suspension d'un véhicule automobile. Les moyens d'assemblage 3 et 4 forment au moins une liaison pivot d'axe sensiblement parallèle à une direction longitudinale du véhicule automobile. Dans un mode de réalisation préférentiel, les moyens d'assemblage 3 et 4 sont des rotules qui sont fixées rigidement à la caisse ou au châssis 1 du véhicule automobile. Du fait de cette fixation rigide, la distance D entre les moyens d'assemblage 3 et 4 est fixe. Par conséquent, il n'y a plus de déplacements parasites des roues lors des débattements verticaux ou lors d'entrée d'efforts transversaux dans un virage. Ces débattements verticaux sont généralement dus à un effort Fz appliqué au niveau des roues, qui est transmis ensuite au niveau des extrémités libres des zones d'extrémité 14 et 15 de la lame de ressort 10 selon l'invention à travers le support des roues auxquelles ces extrémités sont liées. Sur la figure 2, cette déformation fait passer la lame de ressort 10 selon l'invention d'un profil illustré en pointillés au profil illustré en gras, par pivotement des liaisons formées par les moyens d'assemblage 3 et 4. Du fait que la distance D ne peut varier, c'est la partie centrale 11, 12 et 13 de la lame de ressort 10 selon l'invention qui subit une déformation supplémentaire afin d'absorber les écarts de longueur dus à la déformation initiale sous charge lors d'un fonctionnement.

Cela est possible par l'utilisation d'un profil tel que précédemment décrit de la partie centrale 11, 12, 13 comprenant trois courbures dont la courbure centrale est inverse des deux courbures latérales 12 et 13. Une telle forme correspond à une déformée modale du deuxième mode de flexion d'une poutre rotulée en deux points, au niveau des moyens d'assemblage 3 et 4.

Une telle lame de ressort 10 selon l'invention utilisée dans un système de suspension pour véhicule permet un gain de coûts grâce à la suppression des jumelles ou des cales élastiques complexes telles que décrites dans le préambule de cette demande. De plus, cela permet, du fait de la suppression des débattements latéraux parasites au niveau des roues, un gain de performance en comportement routier par une meilleure maîtrise desdits déplacements des roues sous effort, principalement sous un effort vertical Fz ou transversal mais aussi en freinage, puisque dans tous les cas de chargement, la roue est mieux tenue de manière latérale. Enfin, une telle lame de ressort 10 selon l'invention permet d'utiliser une technique très simple de fixation de la lame de ressort 10 selon l'invention sur la caisse ou le châssis 1 du véhicule par l'utilisation de simples rotules ou de cales élastiques rudimentaires très raides faisant office de rotules.

Bien entendu, il est possible d'apporter à l'invention de nombreuses modifications sans sortir du cadre de celle-ci. Par exemple, la partie centrale 11, 12, 13 peut prendre d'autres formes complexes qui permettent d'obtenir un résultat similaire.

## Revendications

1. Lame de ressort (10) pour un système de suspension de véhicule automobile comportant une partie centrale (11,12,13) et deux zones d'extrémité (14,15) situées de part et d'autre de la partie centrale, de zones d'assemblage (16,17) situées respectivement entre la partie centrale et les zones d'extrémité, la partie centrale étant agencée de sorte à pouvoir se déformer en conservant une distance (D) fixe entre les zones d'assemblage et **caractérisée en ce que** le profil des zones d'extrémité (14,15) présente une courbure dans le même sens que la courbure de la zone centrale.

2. Lame de ressort selon la revendication 1, **caractérisé en ce que** la partie centrale comporte une zone centrale (11) présentant une courbure et se prolongeant, de part et d'autre, par des zones latérales adjacentes (12,13) présentant une courbure inverse de la courbure de la zone centrale.

3. Lame de ressort selon la revendication 1 ou 2, **caractérisé en ce que** les zones d'assemblages sont situées à la tangence entre les zones latérales adjacentes de la partie centrale et les zone d'extrémité.

4. Système de suspension pour un véhicule automobile comportant un stabilisateur lié, à chacune de ses extrémités, à un support de roue (2), et des moyens d'assemblage (3,4) du stabilisateur à un châssis (1) du véhicule automobile, **caractérisé en ce que** le stabilisateur comporte une lame de ressort (10) selon l'une des revendications 1 à 3.

5. Système de suspension selon la revendication 4, **caractérisé en ce que** les moyens d'assemblage forment une liaison pivot d'axe perpendiculaire à la lame de ressort entre les zones d'assemblage de la lame de ressort et le châssis du véhicule.

6. Système de suspension selon la revendication 4, **caractérisé en ce que** les moyens d'assemblage forment une liaison rotule entre les zones d'assemblage de la lame de ressort et le châssis du véhicule.

## Patentansprüche

1. Blattfeder (10) für ein Aufhängungssystem eines Automobils, umfassend einen zentralen Abschnitt (11, 12, 13) und zwei Endbereiche (14, 15), welche beiderseits des zentralen Abschnitts angeordnet sind, Montagebereiche (16, 17) jeweils zwischen dem zentralen Abschnitt und den Endbereichen angeordnet sind, wobei der zentrale Abschnitt derart eingerichtet ist, dass er sich verformen kann, wobei ein fester Abstand (D) zwischen den Montagebereichen beibehalten wird, und **dadurch gekennzeichnet, dass** das Profil der Endbereiche (14, 15) eine Krümmung in der selben Richtung aufweist wie die Krümmung des zentralen Bereichs.

2. Blattfeder nach Anspruch 1, **dadurch gekennzeichnet, dass** der zentrale Abschnitt einen zentralen Bereich (11) umfasst, welcher eine Krümmung aufweist und sich beiderseits durch benachbarte laterale Bereiche (12, 13) fortsetzt, welche eine inverse Krümmung zu der Krümmung des zentralen Bereichs aufweisen.

3. Blattfeder nach Anspruch 1 oder 2, **dadurch gekennzeichnet, dass** die Montagebereiche an der Berührung zwischen den benachbarten lateralen Bereichen des zentralen Abschnitts und den Endbereichen angeordnet sind.

4. Aufhängungssystem für ein Automobil, umfassend einen Stabilisator, welcher an jedem seiner Enden mit einem Radträger (2) verbunden ist, sowie Mittel (3, 4) zur Montage des Stabilisators an ein Chassis (1) des Automobils, **dadurch gekennzeichnet, dass** der Stabilisator eine Blattfeder (10) nach einem der Ansprüche 1 bis 3 umfasst.

5. Aufhängungssystem nach Anspruch 4, **dadurch gekennzeichnet, dass** die Mittel zur Montage eine Schwenkverbindung mit einer Achse senkrecht zu der Blattfeder zwischen den Montagebereichen der Blattfeder und dem Chassis des Fahrzeugs bilden.

6. Aufhängungssystem nach Anspruch 4, **dadurch gekennzeichnet, dass** die Montagemittel eine Kugelgelenkverbindung zwischen den Montagebereichen der Blattfeder und dem Chassis des Fahrzeugs bilden.

## Claims

1. Spring leaf (10) for a suspension system of an automotive vehicle, comprising a central part (11, 12, 13) and two end regions (14, 15) located on either side of the central part, assembly regions (16, 17) located respectively between the central part and the end regions, the central part being disposed so as to be capable of deforming whilst maintaining a set distance (D) between the assembly regions and **characterised in that** the profile of the end regions (14, 15) has a curvature in the same direction as the curvature of the central zone.

2. Spring leaf as claimed in claim 1, **characterised in that** the central part comprises a central region (11) having a curvature and being extended on either side by adjacent lateral regions (12, 13) having a curvature that is the inverse curvature of the central region.

3. Spring leaf as claimed in claim 1 or 2, **characterised in that** the assembly regions are located at the tangent between the lateral regions adjacent to the central part and the end regions.

4. Suspension system for an automotive vehicle comprising a stabiliser connected at each of its ends to a wheel support (2), and assembly means (3, 4) for assembling the stabiliser with a chassis (1) of the automotive vehicle, **characterised in that** the stabiliser comprises a spring leaf (10) as claimed in one of claims 1 to 3.

5. Suspension system as claimed in claim 4, **characterised in that** the assembly means form a pivot link of an axis perpendicular to the spring leaf, between the assembly regions of the spring leaf and the chassis of the vehicle.

6. Suspension system as claimed in claim 4, **characterised in that** the assembly means form a swivel link between the assembly regions of the spring leaf and the chassis of the vehicle.
